# EUROPÄISCHE PATENTANMELDUNG

(11) **EP 4 410 431 A1**
(43) Veröffentlichungstag der Anmeldung: **07.08.2024**
(21) Anmeldenummer: 23154534.4
(22) Anmeldetag: 01.02.2023
(51) Int. Cl.: B02C 18/10, B02C 23/18, B02C 18/16, A47J 43/00

(54) **MAHLVORRICHTUNG**

(71) Anmelder: Herzog Maschinenfabrik GmbH & Co. KG, 49086 Osnabrück (DE)
(72) Erfinder: Marks, Marius, 49074 Osnabrück (DE); Berelsmann, Kilian, 49086 Osnabrück (DE); Fiege, Thomas, 48159 Münster (DE)
(74) Vertreter: Stolmár & Partner Patentanwälte PartG mbB

(57) **Zusammenfassung**

Mahlvorrichtung (10) zum Mahlen von organischen Materialien, umfassend einen Antrieb (12) und eine Antriebswelle (21), eine Werkzeuganordnung (20), die von dem Antrieb (12) angetrieben ist, eine Aufnahmeeinrichtung (16) für Probenbehälter (14) an der Arbeitsposition der Werkzeuganordnung (20) und ein Gestell (11) zum Halten des Antriebs (12), der Werkzeuganordnung (20) und der Aufnahmeeinrichtung (16), wobei die Werkzeuganordnung (20) zwischen einer Ruheposition und einer Arbeitsposition bewegbar ausgebildet ist und an der Antriebswelle (21) über der Werkzeuganordnung (20) ein Deckel (40) angeordnet ist, der im Betrieb der Werkzeuganordnung (20) den Probenbehälter (14) verschließt, wobei die Antriebswelle (21) relativ zum Deckel (40) rotierbar ausgebildet ist.

## Beschreibung

### Gebiet der Erfindung

Die Erfindung betrifft eine Messermühle zum Zerkleinern und Homogenisieren von Mahlgut in einem Mahlbecher.

### Stand der Technik

Für die Zerkleinerung bzw. Vermahlung von Mahlgütern werden verschiedene Mahlvorrichtungen eingesetzt, welche sich durch das jeweils zugrundeliegende Zerkleinerungsprinzipien unterscheiden. Neben Schwingkugelmühlen, Planetenkugelmühlen und Scheibenschwingmühlen, werden je nach Anwendungsfall auch Messermühlen verwendet, um anorganische oder auch organische Stoffe zu zerkleinern.

Eine solche Messermühle ist in der Regel wie ein Küchenmixer aufgebaut, d.h. es gibt einen Mahlbecher, an dessen Boden eine Klingenanordnung ausgebildet ist, und einen Deckel, der die offene Oberseite des Mahlbechers verschließt. Dieser Mahlbecher wird auf einen Antrieb aufgesetzt, der durch den Mahlbecherboden mit der Klingenanordnung verbunden wird. Die Verbindung zwischen Antrieb und Klingenanordnung ist abgedichtet, sodass kein Mahlgut an dieser Verbindung aus dem Mahlbecher austreten kann. So kann dann das Mahlgut gemahlen werden. Bei einer Dauernutzung der Messermühle wird dann nacheinander jeder Mahlbecher auf den Antrieb gesetzt und von der Mühle gemahlen.

Bei solchen Messermühlen ist die Reinigung der Klingenanordnung und damit auch die des Mahlbehälters schwierig. Somit müssen für eine Vielzahl von Mahlvorgängen jeweils ein eigener Mahlbehälter mit einer Klingenanordnung vorgesehen werden und bei jedem Behälter muss idealerweise für die Reinigung die Klingenanordnung demontiert und ausgewaschen werden, um eine kreuzkontaminationsfreie Wiederverwendung zu gewährleisten.

### Darstellung der Erfindung

Aufgabe der vorliegenden Erfindung ist es daher, eine Messermühle bereitzustellen, bei der ein Probenbehälter und die Klingenanordnung einfach zu reinigen sind und insbesondere eine Dauernutzung der Messermühle gewährleistet ist.

Eine erfindungsgemäße Mahlvorrichtung zum Mahlen von anorganischen und organischen Materialien umfasst einen Antrieb mit Motor und Antriebswelle, eine Werkzeuganordnung, die von dem Antrieb angetrieben ist, eine Aufnahmeeinrichtung für einen Probenbehälter an der Arbeitsposition der Werkzeuganordnung und ein Gestell zum Halten des Antriebs, der Werkzeuganordnung und der Aufnahmeeinrichtung, wobei die Werkzeuganordnung zwischen einer Ruheposition und einer Reinigungsposition insbesondere stufenlos bewegbar ausgebildet ist und an der Antriebswelle über der Werkzeuganordnung ein Deckel angeordnet ist, der im Betrieb der Werkzeuganordnung den Probenbehälter verschließt, wobei die Antriebswelle relativ zum Deckel rotierbar ausgebildet ist. Durch eine solche Ausgestaltung kann die Messeranordnung aus dem Probenbehälter herausgehoben werden und der Probenbehälter nach dem Entfernen der Proben einfach gereinigt werden. Darüber hinaus ist auch die freiliegende Werkzeuganordnung einfach zu reinigen, bspw. durch Abspritzen mit einem Reinigungsmittel wie Wasser oder einer chemischen Reinigungsflüssigkeit, und eine Demontage der Klingenanordnung nicht mehr notwendig. Zum Zerkleinern und Homogenisieren des Mahlguts sind für die Werkzeuganordnung eine Vielzahl von Messern unterschiedlicher Ausprägungen hinsichtlich Formgebung, Material und Klingenausgestaltung (scharf, stumpf, verrundet) denkbar. Auch verschiedene Arten von Rührwerkzeugen sind denkbar.

Bevorzugt sind der Antrieb und die Antriebswelle mit der Werkzeuganordnung gemeinsam an einem Schlitten befestigt und wobei der Schlitten insbesondere bewegbar an dem Gestell montiert ist, sodass er beispielsweise über einen separaten Antrieb insbesondere linear verfahrbar ist. Dadurch ist die Mahleinheit kompakt ausgebildet und die Verbindung zwischen Antrieb und Werkzeuganordnung kann einfach ausgestaltet werden.

Die Werkzeuganordnung und insbesondere auch der Antrieb und die Antriebswelle sind vorzugsweise über der Aufnahmeeinrichtung des Probenbehälters angeordnet. Dadurch muss die Werkzeuganordnung lediglich in einer Richtung verfahren werden und die Konstruktion der Vorrichtung kann einfach gehalten werden.

Bevorzugt ist der Deckel relativ zur Antriebswelle entlang der Achse verschiebbar ausgebildet. Dadurch kann die Werkzeuganordnung an verschiedenen Positionen im Probenbehälter angeordnet werden, sodass das Mahlgut im Probenbehälter optimal gemahlen werden kann. Insbesondere ist zwischen Deckel und Antriebswelle eine Hülse mit Dichtlippen vorgesehen, die eine gut abgedichtete Verschiebbarkeit gewährleisten kann.

Der Deckel ist vorzugsweise mittels einer Führung federvorgespannt gelagert, insbesondere direkt oder indirekt am Schlitten. D.h. der Deckel kann auch am Antrieb gelagert sein, sofern der Antrieb bewegungsfest am Schlitten montiert ist. Dadurch kann der Deckel einfach verschoben werden, gleitet aber wieder in seine Initialposition zurück, wenn keine Kraft auf ihn wirkt.

Vorzugsweise weist die Antriebswelle eine Dichtung, insbesondere eine Spaltdichtung beliebiger Ausprägung auf, die an dem Grenzbereich zwischen Deckel und Antriebswelle angeordnet ist. Vorzugsweise wird durch die Dichtung im Betrieb ein Luftstrom generiert, insbesondere so, dass im Probenbehälter herumfliegende Partikel nicht den Mahlraum verlassen können. Die Dichtigkeit des Probenbehälters im Betrieb ist damit sichergestellt. Ferner kann bei einer Spaltdichtung auch Reibung zwischen Antriebswelle und Deckel vermieden werden. Eine solche Luftdichtung kann bspw. durch eine pneumatische Vorrichtung oder durch einen Gewindeabschnitt erzeugt werden, der einen zum Mahlraum gerichteten Luftstromdurch Rotation der Antriebswelle erzeugt. Der Gewindeabschnitt kann auch an einem zusätzlichen Element wie einer Hülse ausgebildet sein. Eine solche Spaltdichtung ist daher sehr verschleißarm.

Der Deckel der Vorrichtung umfasst insbesondere Eine Entlüftung, welche am Deckel ausgebildet ist. Dadurch kann bei Mahlgut, dass durch das Vermahlen und Homogenisieren Gas erzeugt, oder während einer kryogenen Zerkleinerung durch Verdampfen des Mediums ein Überdruck im Probenbehälter vermieden und abgeleitet werden.

Die Aufnahmeeinrichtung ist vorzugsweise auf einer insbesondere linear verfahrbaren Plattform montiert. Dadurch kann die Aufnahmeeinrichtung bspw. zwischen einer Ein- bzw. Ausgabeposition für die Probenbehälter und der Bearbeitungsposition verfahren werden. Ferner ist auch eine zusätzliche Unterscheidung zwischen einer Ein- und einer Ausgabeposition möglich.

Vorrichtung nach einem der vorhergehenden Ansprüche, ferner umfassend eine Reinigungskammer zur Reinigung der Werkzeuganordnung. In dieser Kammer kann eine zuverlässige Reinigung der Werkzeuganordnung und vorzugsweise auch der kontaminierten Teile der Antriebwelle und des Deckels bereitgestellt werden, sodass eine automatisierbare Reinigung der Mahlwerkzeuge und der Mahlraumabdeckung erfolgen kann und ein schnell wiederholtes Benutzen der Werkzeuganordnung möglich wird.

Die Reinigungskammer kann eine Spritzdüse oder eine Vielzahl an Spritzdüsen an der Kammerwandung aufweisen. Die Spritzdüsen können als Umlenk- oder Tangentialdüsen ausgebildet sein. Dadurch wird das Reinigen aller kontaminierten Oberflächen erleichtert und sichergestellt. Die Reinigungskammer umfasst vorzugsweise auch einen Abfluss, der insbesondere zentriert im Boden der Kammer ausgebildet ist. Zusätzlich kann der Boden der Kammer geneigt sein, um ein Abfließen der Flüssigkeiten in der Reinigungskammer zu erleichtern. Es kann sowohl eine Reinigung mit flüssigen Medien als auch mit Druckluft vorgenommen werden. Ferner ist die optionale Ausrüstung einer Heißlufttrocknung möglich.

Ferner ist die Reinigungskammer vorzugsweise unter der Bearbeitungsposition der Aufnahmeeinrichtung angeordnet. Die Werkzeuganordnung kann dann ohne zusätzliche Antriebseinrichtungen in die Bearbeitungsposition und in die Reinigungsposition verfahren werden. Ferner ist die Vorrichtung dann auch kompakt und platzsparend ausgebildet.

Vorzugsweise weist die Reinigungskammer einen größeren Durchmesser auf als der zu verwendende Probenbehälter. Dadurch wird sichergestellt, dass auch der Deckel nach dem Betrieb komplett von Rückständen des Mahlguts gereinigt wird.

Bevorzugt weist der Deckel an der Unterseite eine Dichtschicht aus Dichtmaterial auf, insbesondere eine Schicht aus einem flexiblen Material wie Gummi oder ein anderes nicht saugfähiges und vorzugsweise auch beständiges Material. Diese Schicht weist aus den oben genannten Gründen bevorzugt ebenfalls einen größeren Durchmesser als der zu verwendende Proben- bzw. Reinigungsbehälter auf.

### Kurze Beschreibung der Figuren

Figur 1 zeigt eine isometrische Ansicht der Mahlvorrichtung zum Betreiben einer Mahlvorrichtung;
Figur 2 zeigt einen Schnitt durch die Ansicht aus Figur 1;
Figur 3 zeigt eine Vorderansicht der Mahlvorrichtung;
Figur 4 zeigt eine Schnittansicht A-A aus Figur 3;
Figur 5 zeigt eine isometrische Ansicht auf den Antrieb und die Werkzeugvorrichtung;
Figur 6a zeigt eine Vorderansicht auf den Antrieb und einen Schnitt durch die Werkzeuganordnung mit Deckel;
Figur 6b zeigt eine vergrößerte Ansicht der Lagerung der Antriebswelle im Deckel;
Figur 7 zeigt eine Vorderansicht auf den Deckel; und
Figur 8 zeigt einen Schnitt B-B des Deckels aus Figur 7.

### Beschreibung der bevorzugten Ausführungsformen

Im Folgenden werden die Begriffe "oben", "unten", "rechts" und "links", wenn nicht anders erwähnt, immer in Bezug auf die beschriebene Figur verwendet. Ferner wird "axial" in der Bedeutung von entlang einer Achse verwendet, "radial" bedeutet eine zur axialen Richtung senkrechte Richtung und "umfänglich" bedeutet eine Anordnung um die Achse herum.

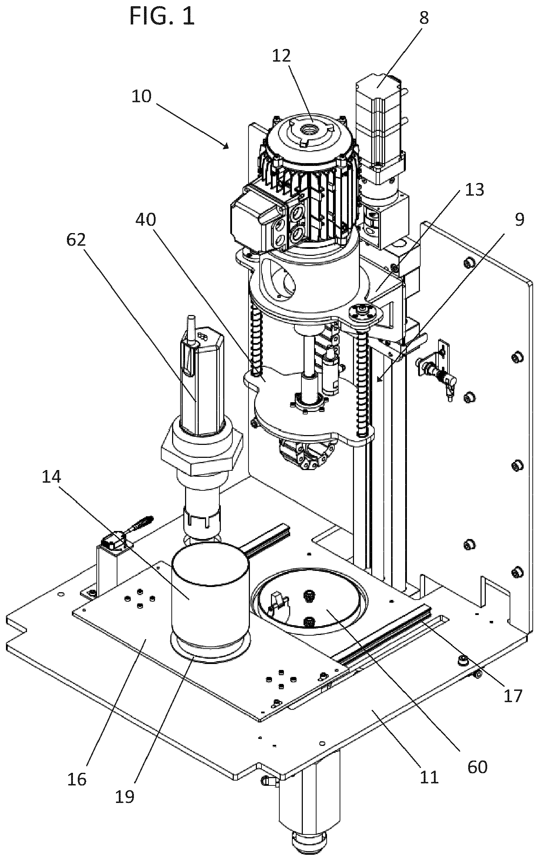

Figur 1 zeigt eine Mahlvorrichtung 10 mit einem Gestell 11, das dazu dient die Mahlvorrichtung 10 entweder an einer Wand zu befestigen oder mit Standfüßen stabil in einer Werkshalle oder einem Labor aufzustellen. Die Mahlvorrichtung 10 umfasst ferner einen Antrieb 12, eine Werkzeuganordnung 20, die hier von einem Deckel 40 verdeckt ist, und eine Aufnahmeeinrichtung 16, die hier als insbesondere linear verfahrbare Plattform ausgebildet ist. Die Aufnahmeeinrichtung 16 kann ein Spannsystem und insbesondere eine Vertiefung, einen Vorsprung oder eine Begrenzung als Standhilfe 19 aufweisen, die den genauen Abstellort für einen Probenbehälter 14 definiert und die mit der Unterseite des Probenbehälters 14 zusammenwirkt, um einen stabilen Stand abzusichern. Zusätzlich oder alternativ kann der Probenbehälter 14 auch mit Greifern festgeklemmt oder über eine Magnet- oder Saugvorrichtung an der Aufnahmeeinrichtung 16 fixiert werden. Der Probenbehälter 14 kann dann auf die Aufnahmeeinrichtung 16 abgestellt werden und der Probenbehälter 14 von einer Ein- und Ausgabeposition der Aufnahmeeinrichtung 16 in eine Bearbeitungsposition verfahren werden. In Figur 1 ist die Aufnahmeeinrichtung 16 in der Ein- und Ausgabeposition dargestellt. Das Bewegen geschieht hier vorzugsweise über Führungsschienen 17, die eine lineare Bewegung der Aufnahmeeinrichtung 16 ermöglichen. Die Bewegung kann manuell vorgenommen werden, kann aber auch automatisch mit Hilfe eines passenden Antriebs erfolgen. Ebenso kann auch die Ein- und Ausgabe der Probenbehälter 14 auf die Aufnahmeeinrichtung 16 ebenfalls manuell oder automatisiert mittels einer Vorrichtung wie bspw. einem Roboter vorgenommen werden.

Der Antrieb 12 kann als Elektromotor oder als eine andere herkömmliche Antriebseinrichtung ausgebildet sein und ist hier über einer Antriebswelle 21 direkt mit der Werkzeuganordnung 20 verbunden. In dieser bevorzugten Ausgestaltung ist der Antrieb 12 direkt über der Werkzeuganordnung 20 angeordnet und beide über der Arbeitsposition der Werkzeuganordnung 20. Hier sind dann auch der Antrieb 12 und die Werkzeuganordnung 20 zusammen auf einem Schlitten 13 gelagert, der wiederum selbst bewegbar ausgebildet ist, sodass die Werkzeuganordnung 20 zwischen einer Ruheposition und einer Arbeitsposition bewegbar ist. Es gibt keine Bewegungseinschränkungen für den Schlitten 13, in der gezeigten Ausgestaltung ist er aber nur in einer Richtung bewegbar, nämlich nach oben und unten. So kann die Konstruktion des Schlittens 13 einfach gehalten werden. Für die Bewegung des Schlittens 13 weist die Mahlvorrichtung 10 vorzugsweise einen Elektromotor 8, eine Spindel 9 und ein oder mehrere Übertragungselemente auf, die mit dem Schlitten 13 über ein Gewinde zusammenwirken und so als Antriebsachse für den Schlitten fungieren.

Der Antrieb 12 muss nicht direkt mit der Werkzeuganordnung 20 verbunden sein, sondern kann mehrere Zwischenelemente wie Ritzel, weitere Wellen, usw. aufweisen. Er kann bspw. so über ein Getriebe die die Werkzeuganordnung 20 antreiben. Die Werkzeuganordnung 20 könnte dann auch unabhängig vom Antrieb 12 bewegbar sein.

Die Mahlvorrichtung umfasst vorzugsweise auch eine Reinigungskammer 60, in der die Werkzeuganordnung 20 insbesondere automatisiert gereinigt werden kann. Die Werkzeuganordnung 20 muss dann auch in eine Reinigungsposition bewegbar sein. dafür kann der Schlitten 13 wie oben erwähnt weitere Freiheitsgrade in der Bewegung haben, bspw. indem er gedreht werden kann und dann die Werkzeuganordnung 20 seitlich verfährt. In der gezeigten Ausgestaltung ist die Reinigungskammer 60 so angeordnet, dass der Schlitten 13 die Werkzeuganordnung 20 auch in die Reinigungskammer 60 verfahren kann. Optional ist ein Heißluftgebläse 62 für die Trocknung der gereinigten und ggf. nassen Oberflächen vorhanden und ist dafür mit der Reinigungskammer verbunden. Vorzugsweise ist auch eine Versorgungseinrichtung für bspw. Reinigungsmittel wie Wasser und chemische Reinigungsflüssigkeiten und/oder Druckluft vorgesehen. Die Versorgungseinrichtung kann dafür an einen bereitgestellten Tank oder eine Wasserleitung angeschlossen werden und spritzt dann die entsprechende Flüssigkeit unter hohem Druck über Düsen in die Reinigungskammer 60.

Der Probenbehälter 14 kann in Form und Material beliebig ausgestaltet sein, sofern er die üblichen konstruktiven Anforderungen an ein Mahlgefäß erfüllt. D.h. hier, der Probenbehälter 14 weist eine Öffnung an der Oberseite auf, die optional mit einem Deckel verschließbar ist, um eine Kontamination der gemahlenen Probe und ebenso ein unkontrolliertes Heraustreten des Mahlguts zu vermeiden. Der optionale Deckel des Probenbehälters 14 kann bspw. verschraubbar sein oder anders am Probenbehälter 14 befestigt werden. Ferner sollte der Probenbehälter 14 eine stabile Standfläche haben, damit er auf die Aufnahmeeinrichtung 16 gestellt werden kann. Die Größe des Probenbehälters 14 spielt in Bezug auf den Deckel 40 und die Werkzeuganordnung 20 eine Rolle. Der Probenbehälter 14 sollte jedenfalls einen kleineren Durchmesser als der Deckel 40 aufweisen, damit der Probenbehälter 14 sicher verschlossen werden kann. Die Werkzeuganordnung 20 sollte ebenfalls kleiner als der Probenbehälter 14 sein. Die übrigen Dimensionen des Probenbehälters, insbesondere bezüglich des Behälterdurchmessers und der Behälterhöhe können unterschiedliche geometrische Ausbildungen aufweisen.

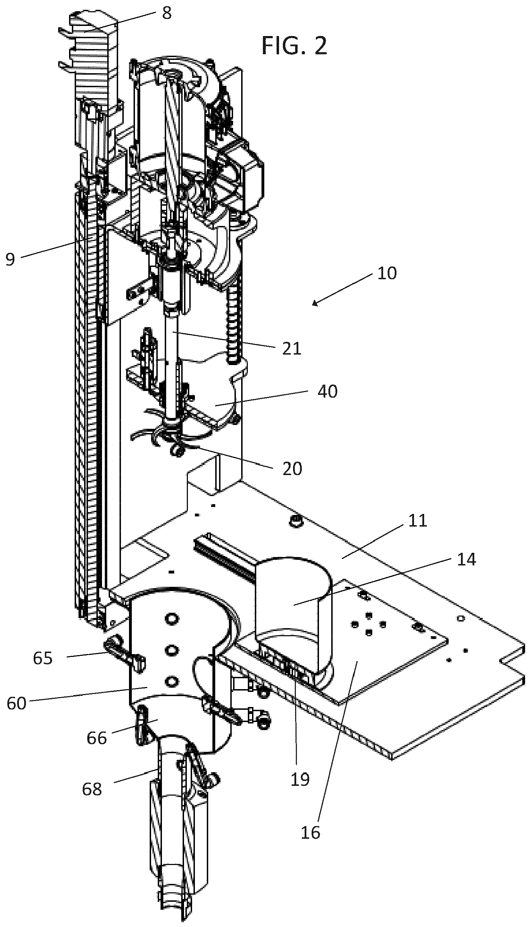

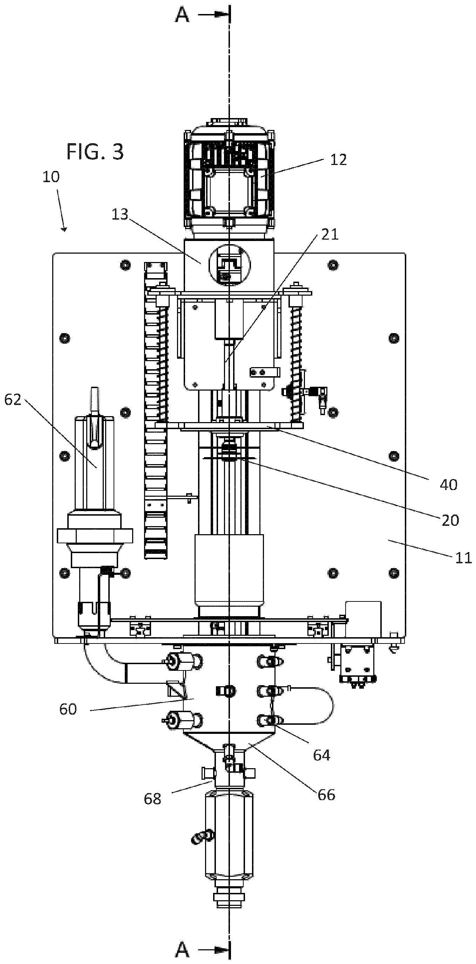

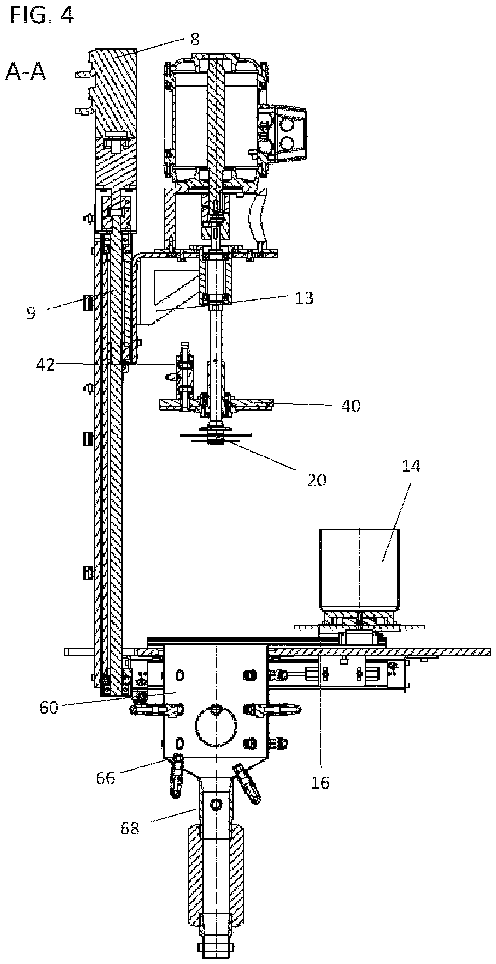

Figur 2 zeigt eine isometrische Schnittansicht der Mahlvorrichtung 10 (Längsschnitt). Figur 3 zeigt eine Vorderansicht der Mahlvorrichtung 10 und Figur 4 einen Längsschnitt A-A aus Figur 3. Einige Details der Mahlvorrichtung 10 sind hier besser zu erkennen, wie beispielsweise die Spindel 9 für den Antrieb des Schlittens 13, die Werkzeuganordnung 20 oder das Innere der Reinigungskammer 60.

Die Reinigungskammer 60 ist bevorzugt zylinderförmig ausgebildet, um eine effiziente Reinigung zu gewährleisten. Andere Ausgestaltungen sind ebenfalls möglich, bspw. ein Prisma mit dreieckigem, quadratischem oder hexagonalem Querschnitt oder andere beliebige Querschnittsformen. Die Reinigungskammer 60 weist vorzugsweise Düsen auf, mit denen eine Reinigungsflüssigkeit wie Wasser oder Chemikalien aber auch Luft eingesprüht werden können, um eine in der Reinigungskammer 60 befindliche Werkzeuganordnung 20 zu säubern. Vorzugsweise ist eine Vielzahl von Düsen 64 ausgebildet, die an unterschiedlichen Stellen an der Kammerwandung der Reinigungskammer 60 angeordnet sind, so dass die Werkzeuganordnung 20 aus unterschiedlichen Richtungen angesprüht und somit gereinigt werden kann. Insbesondere ist zumindest eine Düse auf den Deckel gerichtet. Ferner können auch Umlenkdüsen 65 wie bspw. Tangentialdüsen ausgebildet sein, in der das Reinigungsmittel in der Reinigungskammer 60 umgelenkt und bspw. direkt von unten auf den Deckel gesprüht werden kann. Hier sind die Düsen in einer Reihe übereinander und dann umfänglich an der Kammerwandung angeordnet und insbesondere auf die Mittelachse der Reinigungskammer 60 ausgerichtet. Die Düsen 64 können auch schräg in die Reinigungskammer 60 zielen, also nicht senkrecht zur Kammerwandung ausgerichtet sein. Ferner können Düsen 64 auch am Kammerboden 66 ausgebildet sein um die Gründlichkeit der Reinigung der Werkzeuganordnung 20 noch besser zu gewährleisten. Die Reinigungskammer 60 weist ferner einen Abfluss 68 auf, der sich vorzugsweise im Kammerboden 66 und insbesondere mittig im Kammerboden 66 befindet. Der Kammerboden 66 der Reinigungskammer 60 ist bevorzugt zum Abfluss hingeneigt ausgebildet, so dass das Reinigungsmittel einfacher abfließen kann. Die Reinigungskammer 60 ist insbesondere so dimensioniert, dass sich die Werkzeuganordnung 20 auch in der Reinigungskammer 60 drehen kann. In Figur 4 ist ferner eine optionale Entlüftung 42 gezeigt (hier als Ventil ausgebildet), die dafür sorgt, dass Gase, die beim Mahlprozess entstehen können, aus dem Probenbehälter 14 während der Bearbeitung entweichen können. Eine solche Entlüftung 42 kann aus einem oder mehreren kleinen Lüftungslöchern ausgebildet sein. Vorzugsweise umfasst die Entlüftung jedoch ein oder mehrere Ventile, um auch sehr fein gemahlenes Mahlgut sicher im Probenbehälter 14 zu behalten. So kann auch ein vorbestimmter Druck im Probenbehälter aufrechterhalten werden, wenn es notwendig sein sollte. Weiter ist es bevorzugt, dass die Entlüftung 42 über eine Leitung (nicht gezeigt) mit einem Aufnahmebehälter oder dem Reinigungsbehälter verbunden ist oder nach außen gleitet wird (vorzugsweise mit einem nach Filterung der Gase), sodass in der Umgebung der Mahlvorrichtung 10 keine Gase aus dem Probenbehälter 14 vorhanden sind.

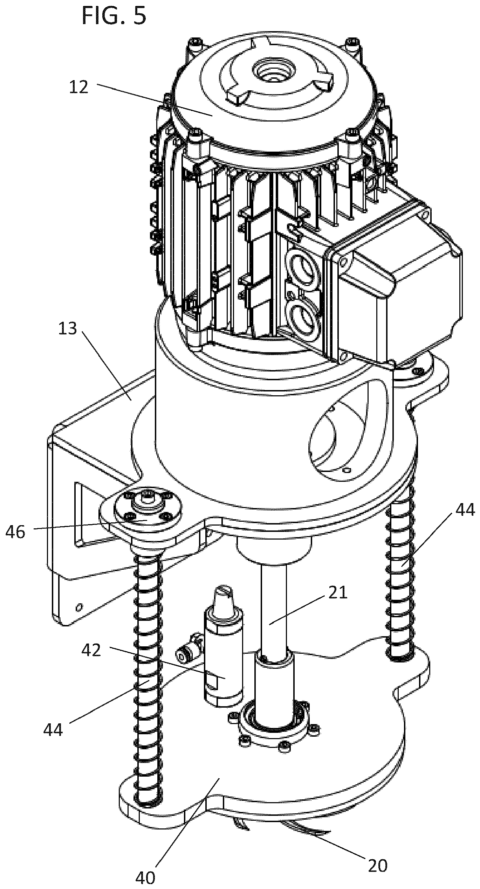

Figur 5 zeigt eine vergrößerte Ansicht des Antriebs 12, der Antriebswelle 21 und der Werkzeuganordnung 20 mit Deckel 40. Die Vorrichtung weist ferner eine Führung 44 auf, die in der gezeigten Ausführung als zwei Führungsstangen 44 ausgebildet ist, die insbesondere am Antrieb 12 und am Deckel 40 gelagert sind. Dadurch wird es ermöglicht, dass der Deckel und der Antrieb relativ zueinander in Umfangsrichtung und in Radialrichtung der Antriebswelle 21 festgelegt sind, in Axialrichtung jedoch nicht. In der gezeigten Ausführung ist der Deckel entlang der Antriebswelle 21 bewegbar, sodass die Werkzeuganordnung 20 beliebig tief oder gering in den Probenbehälter 14 eintauchen kann und der Deckel 40 dennoch immer festsitzt. Dazu ist der Deckel 40 vorzugsweise an der Führung federvorgespannt, sodass er immer mit Druck auf den Probenbehälter 14 und auch den Behälter der Reinigungseinheit aufgepresst wird. Hier sind die Führungsstangen 44 mit einer Gleiteinrichtung 46 am Antrieb 12 gelagert und eine Befestigungseinrichtung 45 am Deckel 40 vorgesehen, sodass sich die Lagerung am Antrieb axial an den Führungsstäben 44 bewegen kann und am Deckel fixiert ist. Es ist aber ebenso möglich, dass die Führung 44 am Deckel 40 gleitend gelagert ist und an der antriebsseitigen Lagerung fixiert ist. Es muss nur sichergestellt werden, dass die Führung außerhalb des Probenbehälters 14 liegt, sodass sie nicht in das Mahlgut eintauchen kann.

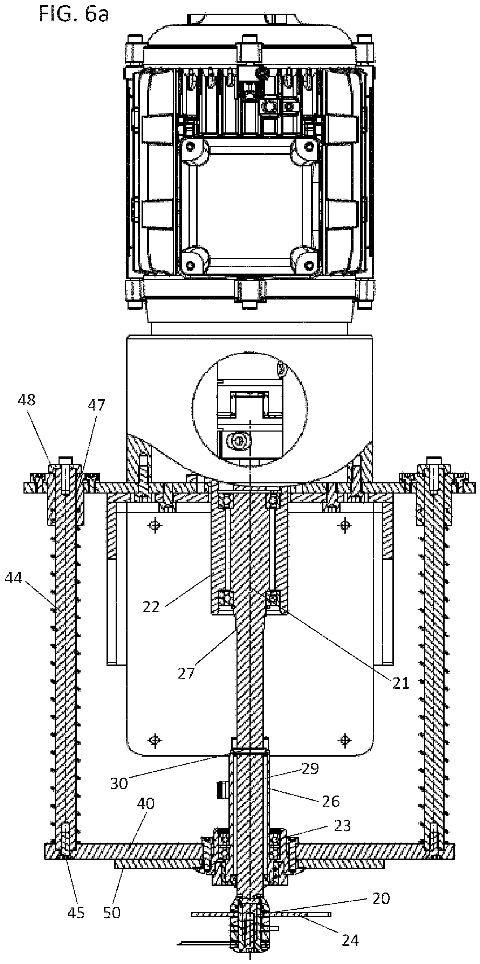

In Figur 6a ist der Antrieb 12 mit einer geschnittenen Werkzeuganordnung 20 und einer geschnittenen Führung zu sehen. Hier sind die Lagerungen der Antriebswelle 21 und der Führungsstäbe 44 im Detail zu erkennen. Die Gleiteinrichtung 46 umfasst bevorzugt eine Hülse 47, in der die Führungsstäbe gleiten können, und einen Anschlag 48, der die Führungsstäbe am Herausfallen hindert und einen maximalen axialen Abstand des Deckels von der Gleiteinrichtung 46 bestimmt. Die Befestigungseinrichtung 45 ist hier durch eine einfache Axialschraube ausgebildet, die den Deckel 40 an den Führungsstangen befestigt. Der Deckel selbst weist an der Unterseite bevorzugt eine Dichtschicht 50 aus einem flexiblen Material wie einem Kunststoff auf. Die Dichtschicht 50 dient dazu, dass ein Probenbehälter 14 an seinem oberen Rand zuverlässig abgedichtet werden kann, indem die Dichtschicht 50 einen größeren Durchmesser aufweist als der Probenbehälter 14. Ferner sollte die Dichtschicht auch einen größeren Durchmesser als die Öffnung der Reinigungskammer 60 aufweisen, sodass die Dichtschicht 50 sicher gesäubert werden kann.

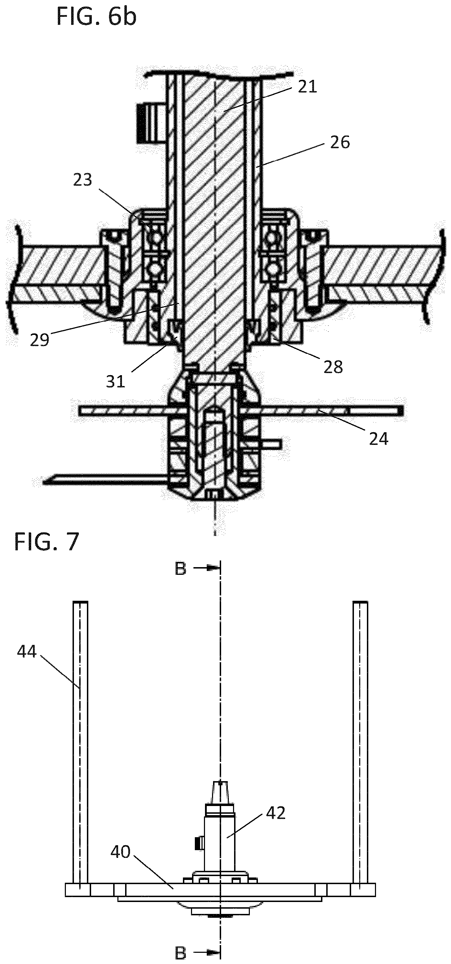

Die Antriebswelle 21 ist am Antrieb 12 bevorzugt mit einfachen Wälzlagern (hier Kugellager) gelagert. Dazu kann wie gezeigt ein Lagergehäuse 22 ausgebildet sein, das eine sichere Lagerung der Antriebswelle 21 ermöglicht. Die Antriebswelle 21 ist vorzugsweise im Deckel 40 über die Hülse 26 gelagert, die mit einem oder mehreren Dichtringen 31 zwischen Hülse und Antriebswelle 21 abgedichtet ist, sodass die Antriebswelle 21 axial in der Hülse 26 bewegt werden kann. Der Dichtring kann auch dazu dienen, die Antriebswelle abzustreifen und sauber zu halten. Die Hülse 26 ist über Wälzlager 23 axial am Deckel 40 gelagert, sodass die Hülse 26 axial am Deckel 40 festgelegt ist. Die Hülse 26 dreht sich zusammen mit der Antriebswelle. Dies wird bspw. mit einem Stift 30 bewerkstelligt, der in einer Nut 29 der Hülse 26 laufen kann und das Drehmoment der Antriebswelle 21 auf die Hülse 26 überträgt. Dadurch kann auch eine Reibung in Umfangsrichtung am Dichtring 31 zwischen Hülse 26 und Antriebswelle 21 vermieden werden. Die Länge der Nut 29 kann den möglichen Hub bestimmen, den die Antriebswelle 21 relativ zum Deckel 40 hat, da der Stift 30 am unteren Ende an den Grund der Nut 29 anschlagen kann. Der Hub kann aber auch über einen Anschlag 27 der Antriebswelle 21 geregelt sein, der die Bewegung der Hülse 26 begrenzt, indem das obere Ende der Hülse 26 anschlagen kann. Die Hubbegrenzung kann aber auch über die Steuerung der Mahlvorrichtung erfolgen. In Figur 6b ist eine vergrößerte Ansicht der Werkzeuganordnung 20 gezeigt. Die Werkzeuganordnung 20 ist am unteren Ende der Antriebswelle 21 angeordnet und umfasst eine Vielzahl von Klingen 24, die je nach Mahlgut meist scharf sind, aber auch stumpf ausgebildet sein können. Eine stumpfere Klinge kann sich bei der Homogenisierung des Mahlguts vorteilhaft auswirken. Es können aber auch scharfe und stumpfe Klingen 24 zusammen verwendet werden. Um ein Austreten von Mahlgut an der Schnittstelle zwischen Deckel und Antriebswelle bzw. zwischen dem stationären und dem sich drehenden Element zu verhindern, ist eine Dichtung 28 vorgesehen. Insbesondere ist diese Dichtung als Spaltdichtung ausgebildet. Dies kann bspw. durch pneumatische Leitungen und Ventile bewerkstelligt werden, die an dieser Stelle Luft in den Probenbehälter einleiten und das Mahlgut aus diesem Bereich fernhalten. Eine bevorzugte Ausgestaltung ist jedoch eine Spaltdichtung 28, die ein Gewinde oder gewindeartige Einkerbungen an dem Umfang des sich drehenden Teils umfasst (hier die Hülse 26) und durch die Drehung des Gewindes einen Luftstrom erzeugt, der das Mahlgut ebenfalls von der Kontaktstelle fernhält.

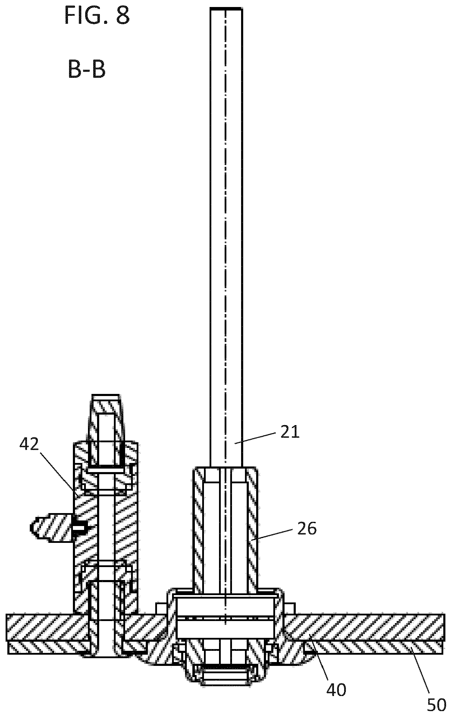

Figur 7 zeigt eine Vorderansicht des Deckels 40. Figur 8 zeigt eine Schnittansicht B-B aus Figur 7. In dieser Schnittansicht ist ein optional verwendetes Entlüftungsventil 42 im Schnitt dargestellt.

Im Betrieb wird eine Mahlvorrichtung 10 mit allen Elementen wie folgt verwendet: Zuerst wird ein Probenbehälter 14 in die Mahlvorrichtung 10 eingegeben. Dies geschieht bevorzugt über die Aufnahmeeinrichtung 16 entweder manuell, oder automatisiert, indem die Aufnahmeeinrichtung 16 in die Eingabeposition gefahren wird und dort ein mit Mahlgut befüllter Probenbehälter 14 auf die Aufnahmeeinrichtung 16 gesetzt wird. Dann wird die Aufnahmeeinrichtung 16 in die Bearbeitungsposition gefahren und die Werkzeuganordnung 20 in den befüllten Probenbehälter 14 abgesenkt. Der Deckel 40 schließt die Öffnung des Probenbehälters 14, wobei insbesondere die Dichtschicht 50 am oberen Rand des Probenbehälters 14 abdichtet. Nach dem Abdichten wird die Werkzeuganordnung 20 in Rotation versetzt und der Absenkvorgang fortgesetzt. Dann wird das Mahlgut gemahlen und die Werkzeuganordnung 20 wieder angehoben. Der Probenbehälter 14 wird entfernt (manuell oder automatisch) und die Werkzeuganordnung 20 in die Reinigungskammer abgesenkt. Dort wird die Werkzeuganordnung 20 dann mit dem Reinigungsmittel aus der Versorgungseinrichtung über die Düsen 64 gereinigt. Je nach Anforderung an die Sauberkeit ist eine nachträgliche Trocknung mittels Heißluft und auch lediglich eine Reinigung der Oberflächen mittels Druckluft möglich. Die Werkzeuganordnung 20 kann sich während des Reinigungsvorgangs auch in Rotation befinden. Die Dichtschicht 50 wird dabei ebenfalls gereinigt. Danach kann die Werkzeuganordnung 20 wieder in die Ruheposition gefahren werden und ein neuer Probenbehälter mit Mahlgut kann von der gereinigten Werkzeuganordnung 20 wieder bearbeitet werden.

### Bezugszeichenliste

Elektromotor 8
Spindel 9
Vorrichtung 10
Gestell 11
Antrieb 12
Schlitten 13
Probenbehälter 14
Aufnahmeeinrichtung 16
Führungsschiene 17
Standhilfe 19
Werkzeuganordnung 20
Antriebswelle 21
Lagergehäuse 22
Wälzlager 23
Klinge 24
Hülse 26
Anschlag 27
Dichtung 28
Nut 29
Stift 30
Dichtring 31
Deckel 40
Entlüftung 42
Führung 44
Befestigungseinrichtung 45
Gleiteinrichtung 46
Hülse 47
Anschlag 48
Dichtschicht 50
Reinigungskammer 60
Heißluftgebläse 62
Düse 64
Umlenkdüse 65
Kammerboden 66
Abfluss 68

## Patentansprüche

1. Mahlvorrichtung (10) zum Mahlen von organischen Materialien, umfassend
einen Antrieb (12) und eine Antriebswelle (21);
eine Werkzeuganordnung (20), die von dem Antrieb (12) angetrieben ist;
eine Aufnahmeeinrichtung (16) für Probenbehälter (14) an der Arbeitsposition der Werkzeuganordnung (20); und
ein Gestell (11) zum Halten des Antriebs (12), der Werkzeuganordnung (20) und der Aufnahmeeinrichtung (16);
**dadurch gekennzeichnet, dass**
die Werkzeuganordnung (20) zwischen einer Ruheposition und einer Arbeitsposition bewegbar ausgebildet ist; und
an der Antriebswelle (21) über der Werkzeuganordnung (20) ein Deckel (40) angeordnet ist, der im Betrieb der Werkzeuganordnung (20) den Probenbehälter (14) verschließt, wobei die Antriebswelle (21) relativ zum Deckel (40) rotierbar ausgebildet ist.

2. Vorrichtung (10) nach Anspruch 1, bei der der Antrieb und die Antriebswelle (21) mit der Werkzeuganordnung (20) gemeinsam an einem Schlitten (13) befestigt sind und der Schlitten (13) insbesondere über eine Antriebsachse (9) linear bewegbar an dem Gestell montiert ist.

3. Vorrichtung (10) nach einem der vorhergehenden Ansprüche, bei der zumindest die Werkzeuganordnung (20) über der Aufnahmeeinrichtung (16) des Probenbehälters (14) angeordnet ist.

4. Vorrichtung (10) nach einem der vorhergehenden Ansprüche, bei der der Deckel (40) relativ zur Antriebswelle (21) verschiebbar ausgebildet ist.

5. Vorrichtung (10) nach Anspruch 4, bei der der Deckel mittels einer Führung (44) insbesondere federvorgespannt gelagert ist.

6. Vorrichtung (10) nach einem der vorhergehenden Ansprüche, bei der die Antriebswelle (21) eine Dichtung (28) aufweist, die an dem Grenzbereich zwischen Deckel (40) und Antriebswelle (21) angeordnet ist.

7. Vorrichtung (10) nach Anspruch 6, bei der die Dichtung (28) eine Spaltdichtung ist und ein Luftstrom an der Dichtung (28) durch eine pneumatische Vorrichtung erzeugt wird oder indem am Grenzbereich der Antriebswelle ein Gewindeabschnitt vorgesehen ist, der durch Rotation einen Luftstrom an der Antriebswelle erzeugt.

8. Vorrichtung (10) nach einem der vorhergehenden Ansprüche, ferner umfassend eine Entlüftung (42), welche am Deckel (40) ausgebildet ist.

9. Vorrichtung (10) nach einem der vorhergehenden Ansprüche, bei der die Aufnahmeeinrichtung auf einer verfahrbaren Plattform montiert ist.

10. Vorrichtung (10) nach einem der vorhergehenden Ansprüche, ferner umfassend eine Reinigungskammer (60) zur Reinigung der Werkzeuganordnung (20).

11. Vorrichtung (10) nach Anspruch 10, bei der die Reinigungskammer (60) eine Vielzahl an Spritzdüsen (64, 65) an der Kammerwandung aufweist.

12. Vorrichtung (10) nach Anspruch 10 oder 11, wobei die Reinigungskammer (60) unter der Bearbeitungsposition der Aufnahmeeinrichtung (16) angeordnet ist.

13. Vorrichtung (10) nach einem der Ansprüche 10 bis 12, wobei die Reinigungskammer (60) einen größeren Durchmesser aufweist als der zu verwendende Probenbehälter (14).

14. Vorrichtung (10) nach einem der vorhergehenden Ansprüche, wobei der Deckel (60) an der Unterseite eine Dichtschicht (50) aufweist.
